# EUROPÄISCHE PATENTANMELDUNG

(11) **EP 4 138 240 A1**
(43) Veröffentlichungstag der Anmeldung: **22.02.2023**
(21) Anmeldenummer: 22190233.1
(22) Anmeldetag: 12.08.2022
(51) Int. Cl.: H02G 3/22, H02G 3/08

(54) **ANORDNUNG MIT EINER KABELWANDDURCHFÜHRUNG FÜR MEHRERE KABEL UND STECKVERBINDER**

(30) Priorität: 17.08.2021 DE 102021121353
(71) Anmelder: CONTA-CLIP Verbindungstechnik GmbH, 33161 Hövelhof (DE)
(72) Erfinder: Nowastowski-Stock, Jörg, 32760 Detmold (DE)
(74) Vertreter: Bittner, Thomas L.

(57) **Zusammenfassung**

Die Erfindung betrifft eine Anordnung mit einer Kabelwanddurchführung für mehrere Kabel, welche ein Gehäuse (1), bei dem Wandabschnitte (2) einen Gehäuseinnenraum (3) mehrseitig begrenzen, und eine Kabelwanddurchführung in einem Bereich einer Wandöffnung (5) aufweist, die in einem der Wandabschnitte (4) zum Hindurchführen mehrerer Kabel gebildet ist, wobei die Kabelwanddurchführung Folgendes aufweist: einen Aufnahmerahmen (6), der die Wandöffnung (5) zumindest teilweise umgreifend an dem Wandabschnitt (4) einstückig angeformt ist und mit dem der Wandöffnung (5) gegenüberliegend eine Aufnahme gebildet ist; mindestens ein Dichtungselement (11), welches in der Aufnahme angeordnet ist und mit dem gedichtete Durchgänge (12) für die mehreren Kabel bereitgestellt sind, die jeweils eingerichtet sind, ein Kabel zum Durchführen durch die Wandöffnung (5) hindurch dichtend aufzunehmen; und ein dem Aufnahmerahmen (6) zugeordnetes Abdeckbauteil (16), welches das mindestens eine Dichtungselement (11) in der Aufnahme sichernd montiert ist. Weiterhin ist ein Steckverbinder offenbart.

## Beschreibung

Die Erfindung betrifft eine Anordnung mit einer Kabelwanddurchführung für mehrere Kabel sowie einen Steckverbinder.

### Hintergrund

Eine Kabelwanddurchführung dient dazu, Kabel durch eine Öffnung oder einen Durchbruch in einem Wandabschnitt von der einen auf die andere Seite des Wandabschnitts hindurchzuführen, insbesondere zum Einführen von Kabel in einem Gehäuse, zum Beispiel einem Kabelschrank. Hierbei ist der Durchgang der Kabel durch die Wandöffnung hindurch regelmäßig abzudichten, um so den Gehäuseinnenraum gegenüber der Umgebung abzudichten. Hierzu kann vorgesehen sein, sogenannte Dichtungselemente für die Kabelwanddurchführung zu verwenden, die einen Kabeldurchgang aufweisen, in welchem das hindurchzuführende Kabel dichtend aufgenommen werden kann.

Aus dem Dokument EP 3 404 789 A1 ist eine Leitungsdurchführung mit einem Grundrahmen und mit wenigstens einem Leitungsdurchführungsmodul bekannt, welches mit einer oder mehreren Durchgangsöffnung(en) für eine jeweilige Leitung versehenen ist. Die Außenabmessungen der Leitungsdurchführungsmodule sind an den Innenquerschnitt des Grundrahmens angepasst, sodass die Leitungsdurchführungsmodule im Innenquerschnitt des Grundrahmens anordbar sind. An dem Grundrahmen ist ferner wenigstens ein Halteteil befestigt, mittels welchem die Leitungsdurchführungsmodule unverlierbar in dem Grundrahmen festlegbar sind. Gemäß dem Dokument EP 3 404 789 A1 ist vorgesehen, dass das wenigstens eine an dem Grundrahmen befestigte Halteteil zwischen einer Halteposition, in welcher es die Leitungsdurchführungsmodule unverlierbar in dem Grundrahmen festlegt, und einer Freigabeposition, in welcher die Leitungsdurchführungsmodule dem Grundrahmen entnehmbar und in den Grundrahmen einführbar sind, hin und her bewegbar ist.

In den Dokumenten DE 20 2015 102 280 U1, DE 10 2016 223 425 A1, WO 2018 / 096 136 A1, WO 2020 / 207 796 A1 und DE 10 2016 213 873 A1 werden ebenfalls Kabelwanddurchführungen und Steckverbinder beschrieben.

### Zusammenfassung

Aufgabe der Erfindung ist es, eine Anordnung mit einer Kabelwanddurchführung für mehrere Kabel anzugeben, mit der bei vermindertem Montageaufwand eine sichere und gedichtete Wanddurchführung für mehrere Kabel hergestellt werden kann. Darüber hinaus soll ein Steckverbinder mit verbesserter Kabelwanddurchführung bereitgestellt werden.

Gelöst wird die Aufgabe durch eine Anordnung mit einer Kabelwanddurchführung für mehrere Kabel nach dem unabhängigen Anspruch 1 sowie einen Steckverbinder nach dem nebengeordneten Anspruch 14. Ausgestaltungen sind Gegenstand von abhängigen Unteransprüchen.

Nach einem Aspekt ist eine Anordnung mit einer Kabelwanddurchführung für mehrere Kabel geschaffen, aufweisen: ein Gehäuse, bei dem Wandabschnitte einen Gehäuseinnenraum mehrseitig umgeben; und eine Kabelwanddurchführung in einem Bereich einer Wandöffnung, die in einem der Wandabschnitte zum Hindurchführen mehrerer Kabel gebildet ist. Die Kabelwanddurchführung weist Folgendes auf: einen Aufnahmerahmen, der die Wandöffnung zumindest teilweise umgreifend an dem Wandabschnitt einstückig angeformt ist und mit dem der Wandöffnung gegenüberliegend eine Aufnahme gebildet ist; mindestens ein Dichtungselement, welches in der Aufnahme angeordnet ist und mit dem gedichtete Durchgänge für die mehreren Kabel bereitgestellt sind, die jeweils eingerichtet sind, ein Kabel zum Durchführen durch die Wandöffnung hindurch dichtend aufzunehmen; und ein dem Aufnahmebauteil zugeordnetes Abdeckbauteil, welches das mindestens eine Dichtungselement in der Aufnahme sichernd montiert ist.

Nach einem weiteren Aspekt ist ein Steckverbinder mit der Anordnung geschaffen.

Das Gehäuse, an welchem die Kabelwanddurchführung angeordnet ist, kann ein ein- oder mehrteiliges Gehäuse sein. Beispielsweise kann ein einteiliges Basisgehäuse mit einem hieran zu montierenden Gehäusedeckel zum Verschließen des Gehäuseinnenraums vorgesehen sein. In einer Ausgestaltung ist das Gehäuse ein tragbares Gehäuse, insbesondere als Teil einer tragbaren Vorrichtung, die mit der Kabelwanddurchführung gebildet ist.

Der Wandabschnitt mit der Öffnung oder dem Durchbruch, welcher / welchem die Kabelwanddurchführung zugeordnet ist, kann aus einem Kunststoffmaterial bestehen, beispielsweise mittels Spritzgießen hergestellt sein. Das Gehäuse kann insgesamt aus Kunststoffmaterial hergestellt sein. Alternativ können verschiedenen Materialien oder Werkstoffe für den Wandabschnitt und / oder das Gehäuse zum Einsatz kommen, beispielweise Kunststoff und Metall.

Die einstückige Anformung des Aufnahmerahmens an dem Wandabschnitt, derart, dass der Aufnahmerahmen die Wandöffnung teilweise oder im Wesentlichen vollständig umgibt, mindert den Montageaufwand beim Herstellen der Kabelwanddurchführung. Es entfallen Arbeitsschritte beim Herstellen der Kabelwanddurchführung an dem Gehäuse, insbesondere eine notwendige Befestigungsmontage des Aufnahmerahmens. Auch ist so eine korrekte Lage des Aufnahmerahmens in Bezug auf die Wandöffnung stets sichergestellt, um dann die weiteren Elemente der Kabelwanddurchführung korrekt zu montieren.

Der Aufnahmerahmen kann mit einer von der Außenseite des Wandabschnitts vorstehenden Rahmenwand gebildet sein, die an den Wandabschnitt einstückig angeformt ist. Eine Innenseite der Rahmenwand kann hierbei oder bei anderen Ausführungsformen fluchtend mit innenseitigen Flächen der Wandöffnung angeordnet sein. Das zumindest eine in dem Aufnahmerahmen angeordnete Dichtungselement kann sich nach der Montage bei dieser oder anderen Ausführungsformen entweder nur im Bereich gegenüber dem Aufnahmerahmen oder alternativ auch bis in den Bereich der innenseitigen Flächen der Wandöffnung erstrecken, wobei zwischen gegenüberliegenden Flächen jeweils ein Berührungskontakt ausgebildet sein kann. In einer Ausgestaltung ist die Rahmenwand auf einem Sockelabschnitt angeordnet und hieran einstückig angeformt, welcher seinerseits einstückig an dem Wandabschnitt mit der Wandöffnung und diese teilweise oder vollständig umgreifend gebildet ist.

Die Rahmenwand kann mit Stützwandabschnitten gebildet sein, die die Rahmenwand in einer auf der Außenseite des Wandabschnitts aufrechtstehenden Lage stützen. Die Stützwandabschnitte können zum Beispiel eine mehreckige Querschnittsfläche haben, insbesondere eine Dreiecksform. Ein oder mehrere der Stützwandabschnitte können in Eckbereichen der die Wandöffnung umgebenden Rahmenwand angeordnet sein.

Die Rahmenwand kann wabenförmige Wandbereiche aufweisen. Hierdurch wird eine materialsparende und mechanisch stabile Ausbildung der Rahmenwand zumindest abschnittsweise unterstützt.

Der Aufnahmerahmen kann die Wandöffnung im Wesentlichen vollständig umgreifen. Hierbei kann der Aufnahmerahmen im Wesentlichen durchgehend oder unterbrochen um die Wandöffnung herum ausgebildet sein.

In der Aufnahme kann ein Rahmenbauteil angeordnet sein, welches die Aufnahme in mehrere Teilaufnahmen unterteilt, die eingerichtet sind, jeweils ein Dichtungselement aufzunehmen, mit dem zumindest ein gedichteter Durchgang für eines der mehreren Kabel bereitgestellt ist.

Mit dem Rahmenbauteil können ein oder mehrere Trennwände innerhalb der Aufnahme ausgebildet sein, derart, dass die mehreren Teilaufnahmen für die jeweilige Aufnahme eines oder mehrerer Dichtungselemente ausgebildet sind. Bei dieser oder anderen Ausführungsformen sind die Dichtungselemente aus einem elastisch nachgebenden Material, derart, dass das Material des Dichtungselements nach der Montage um das in einem Durchgang aufgenommene Kabel gegen dieses dichtend gedrückt wird.

Das Rahmenbauteil, welches ein- oder mehrteilig ausgeführt ist, kann innerhalb der Aufnahme lösbar montiert sein, beispielsweise mittels einer Steck- und / oder Klemmverbindung. Alternativ kann eine nichtlösbare Montage vorgesehen sein. Das Rahmenbauteil kann in zugeordneten Steckaufnahmen lösbar angeordnet sein, die an der Rahmenwand innenseitig angeordnet sind.

Die mehreren Teilaufnahmen für die Dichtungselemente können mit einem sich nach außen (von dem Gehäuse weg) aufweitenden Querschnitt ausgebildet sein. Die Dichtungselemente können eine hieran angepasste (Negativ-) Außenform aufweisen, derart, dass eine Klemmwirkung für die Dichtungselemente beim Einführen in die zugeordneten Teilaufnahme mit zunehmenden Einschieben in die Teilaufnahme zunimmt.

Der Aufnahmerahmen kann für ein Einführen des wenigstens einen Dichtungselements in dem Aufnahmeraum von außen auf einer von dem Gehäuse abgewandten Seite eingerichtet sein. Die Montage des Dichtungselements in der Aufnahme erfolgt hierbei von außen. Der Aufnahmeraum kann bei dieser oder anderen Ausgestaltungen einen sich nach außen von dem Gehäuse weg aufweitende Querschnitt aufweisen.

Das Abdeckbauteil kann werkzeuglos montiert sein. Beispielsweise kann eine Klemm-, Steck- und / oder Klickverbindung vorgesehen sein, um das Abdeckbauteil werkzeuglos montierbar auszuführen.

Das Abdeckbauteil kann mit Hilfe einer Verbindungseinrichtung montiert sein, die an dem Aufnahmerahmen gebildet ist. Die Verbindungseinrichtung an dem Aufnahmerahmen wirkt hierbei mit zugeordneten Verbindungselementen an dem Abdeckbauteil zusammen, um das Abdeckbauteil zu montieren, nachdem zuvor das eine oder die mehreren Dichtungselemente in der Aufnahme angeordnet wurden. Alternativ oder ergänzend kann die Verbindungseinrichtung zum Montieren des Abdeckbauteils an dem Wandabschnitt ausgebildet sein. Die Verbindungseinrichtung und die zugeordneten Verbindungselemente, mit der das Abdeckbauteil montiert ist, können nach der Montage des Abdeckbauteils innenliegend angeordnet sein, also zum Beispiel verdeckt durch das Abdeckbauteil selbst.

Das Abdeckbauteil kann in der montierten Stellung einen Gehäuseeckbereich umgreifen, in welchem der Wandabschnitt mit einem benachbarten Wandabschnitt des Gehäuses verbunden ist. Bei dieser Ausführungsform umgreift das Abdeckbauteil in der montierten Stellung Eckbereiche des Gehäuses, in welchen Wandabschnitten des Gehäuses zusammenstoßen, sei es in Teilabschnitten von Gehäusekanten oder umlaufend durchgehend oder unterbrochen. Die Wandabschnitte können in den Eckbereichen einstückig verbunden sein.

Das Abdeckbauteil kann mit Blick auf die Wandöffnung randseitig mit dem mindestens einen Dichtungselement überlappend angeordnet sein. Dieses trägt zur Sicherung der Dichtungselemente nach deren Montage in der Aufnahme bei.

Das Abdeckbauteil kann mehrteilig mit mehreren Abdeckelementen gebildet sein, derart, dass bei der Montage des Abdeckbauteils eines der Abdeckelemente mit zumindest einem weiteren der Abdeckelemente mit Hilfe einander zugeordneter Verbindungselemente verbunden wird. Die Verbindungselemente an den Abdeckelementen können derart ausgebildet sein, dass die zu verbindenden Abdeckelemente beim Zusammenführen und beim Lösen voneinander in einer Verbindungsrichtung zu führen sind, die quer zur Durchgangsrichtung der Wandöffnung ausgebildet ist. Eine Steck-, Klemm und / oder Klickverbindung kann zum Beispiel zwischen den Abdeckelementen vorgesehen sein, um diese bei solchen Verbindungsarten oder anderen werkzeuglos zu verbinden.

Das Gehäuse kann ein Steckverbindergehäuse sein, welches eingerichtet ist, im Gehäuseinnenraum ein Steckverbinderbauteil mit elektrischen Kontaktelementen aufzunehmen. Die Kabelwanddurchführung dient hierbei dazu, die mehreren Kabel von außen in das Steckverbindergehäuse einzuführen, um sie dort mit den elektrischen Kontaktelementen des Steckverbinderbauteils zu verbinden, mit denen zum Beispiel Kontaktstifte und / oder Kontaktbuchsen bereitgestellt sind. Um das Steckverbindergehäuse nach dem Zusammenstecken des Steckverbindergehäuses mit einem zugeordneten Verbindungsgehäuse zu sichern, können an dem Steckverbindergehäuse Sicherungselemente vorgesehen sein, zum Beispiel Gehäusevorsprünge und / oder schwenkbare Sicherungselemente, die mit zugeordneten Sicherungselementen an dem Verbindungsgehäuse zusammenwirken, so dass die lösbare Verbindung gegen ein unbeabsichtigtes Lösen gesichert werden kann. Bei dem Steckverbindergehäuse kann eine weitere Wandöffnung, durch die hindurch der Zugang zu den Kontaktelementen ausgebildet ist, der Wandöffnung mit der Kabelwanddurchführung gegenüberliegend angeordnet sein.

Die vorangehend erläuterten Ausgestaltungen betreffend die Anordnung mit der Kabelwanddurchführung für mehrere Kabel können im Zusammenhang mit dem Steckverbinder entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer Anordnung mit einer Kabelwanddurchführung an einem Gehäuse vor dem Ausbilden der Kabelwanddurchführung;
- Fig. 2: eine weitere schematische perspektivische Darstellung der Anordnung aus Fig. 1;
- Fig. 3: eine schematische perspektivische Darstellung der Anordnung aus Fig. 1, wobei die Kabelwanddurchführung ausgebildet ist;
- Fig. 4: eine schematische perspektivische Darstellung einer weiteren Anordnung mit einer montierten Kabelwanddurchführung an einem Gehäuse;
- Fig. 5: eine schematische perspektivische Darstellung einer Anordnung mit einem Steckverbinder mit einer Kabelwanddurchführung an einem Steckverbindergehäuse vor dem Ausbilden der Kabelwanddurchführung;
- Fig. 6: eine weitere perspektivische Darstellung der Anordnung aus Fig. 5;
- Fig. 7: eine schematische perspektivische der Anordnung aus Fig. 5 mit ausgebildeter Kabelwanddurchführung und
- Fig. 8: eine schematische perspektivische Darstellung einer weiteren Anordnung mit einem Steckverbinder mit einer alternativen Kabelwanddurchführung am Steckverbindergehäuse.

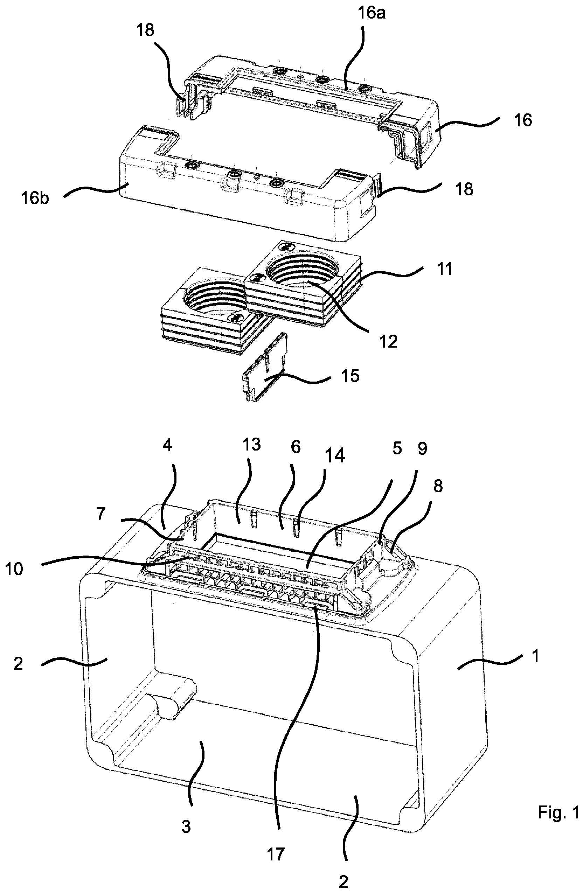

Fig. 1 zeigt eine schematische perspektivische Darstellung einer Anordnung mit einem Gehäuse 1, bei dem Wandabschnitte 2 einen Gehäuseinnenraum 3 mehrseitig umgeben. In einem Wandabschnitt 4 ist ein Gehäuseöffnung 5 ausgebildet, um durch die Gehäuseöffnung 5 Kabel (nicht dargestellt) hindurchzuführen. Die Wandöffnung 5 umgebend oder umgreifend ist ein Aufnahmerahmen 6 einstückig an dem Wandabschnitt 4 angeformt. Die Ausbildung des einstückig angeformten Aufnahmerahmens 6, der mit einer umlaufenden Rahmenwand 7 gebildet ist, kann beispielsweise mittels Spritzgießen erfolgen. Im alternativen Fall eines Metallgehäuses kann vorgesehen sein, den Aufnahmerahmen 6 mittels umgebogener Wandabschnitte herzustellen. Der Gehäuseinnenraum 3 kann mit einem Gehäusedeckel (nicht dargestellt) verschlossen werden.

Bei der gezeigten Ausführungsform sind an der Rahmenwand außenseitig Stützwandabschnitte 8 vorgesehen, insbesondere in Eckbereichen 9 des Aufnahemrahmens 6. Ein Teilwandabschnitt 10 ist wabenförmig ausgebildet.

Zur Ausbildung einer Kabelwanddurchführung im Bereich der Wandöffnung 5, sind Dichtungselemente 11 vorgesehen, die jeweils einen Durchgang 12 zur Aufnahme eines Kabels (nicht dargestellt) aufweisen. Im Bereich einer Innenseite 13 weist die Rahmenwand 7 Steckaufnahmen 14 für ein Rahmenbauteil 15 auf, so dass das Rahmenbauteil 15 in der mit dem Aufnahmerahmen 6 gebildeten Aufnahme lösbar angeordnet werden kann, um für die Dichtungselemente 11 getrennte Teilaufnahmen bereitzustellen, die bei dem dargestellten Ausführungsbeispiel jeweils eines der Dichtungselemente 11 aufnehmen.

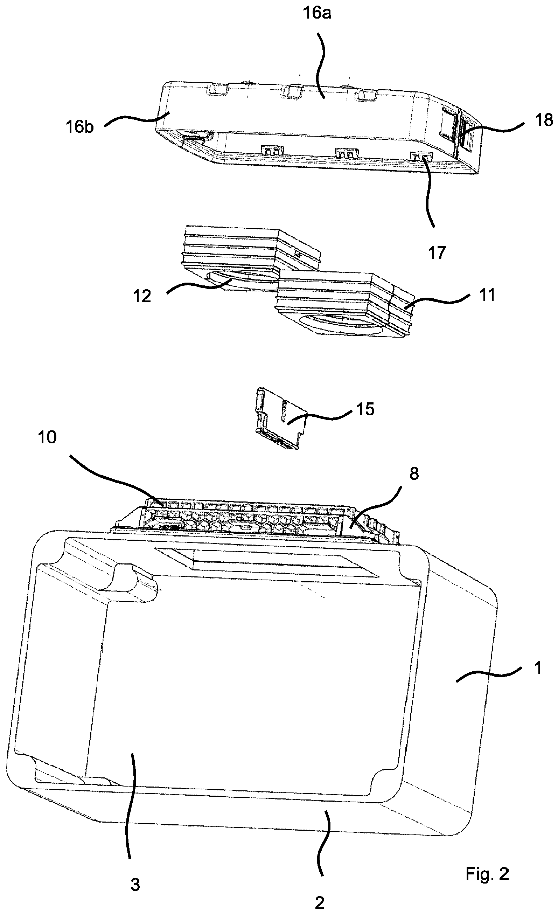

Sind die Dichtungselemente 11 (mit den Kabeln) in der Aufnahme in dem Aufnahmerahmen 6 angeordnet, erfolgt die Montage eines Abdeckbauteils 16, welches bei dem gezeigten Ausführungsbeispiel zweiteilig mit Bauteilen 16a, 16b ausgeführt ist. Alternativ kann eine einteilige Ausbildung vorgesehen sein. Das Abdeckbauteil 16 ist werkzeuglos zu montieren mit Hilfe einer Verbindungseinrichtung 17, die beim gezeigten Beispiel mit Verbindungselementen am Aufnahmerahmen 6 einerseits und am Abdeckbauteil 16 andererseits (vgl. Fig. 2) ausgeführt ist.

Die Bauteilen 16a, 16b des Abdeckbauteils 6 sind mittels einer Verbindungseinrichtung 18 lösbar verbindbar.

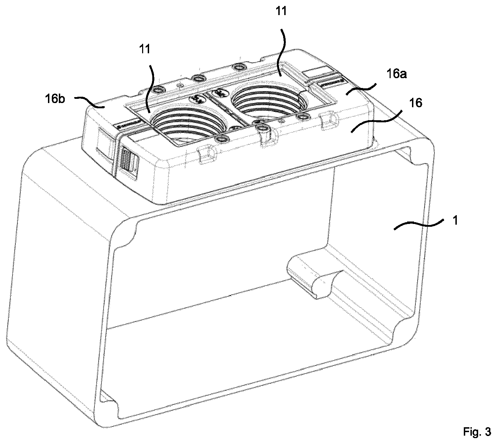

Fig. 2 zeigt eine weitere perspektivische Darstellung der Anordnung aus Fig. 1 mit der noch zu montierenden Kabelwanddurchführung. Letztere ist dann gemäß der perspektivischen Darstellung in Fig. 3 ausgebildet, wenn auch das Abdeckbauteil 16 montiert ist. Bei dessen Montage werden die Bauteile 16a, 16b in einer Montagerichtung miteinander verbunden, die quer zur Durchgangsrichtung der Wandöffnung 5 ausgebildet ist. Hierzu weisen die Bauteile 16a, 16b einander zugeordnete Verbindungselemente 18 auf (vgl. Fig. 1).

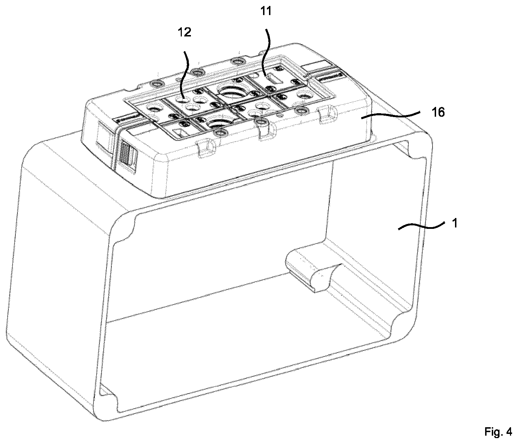

Fig. 4 zeigt eine alternative Ausgestaltung zu der Anordnung in Fig. 1, wobei für die gleichen Merkmale dieselben Bezugszeichen wie in den Fig. 1 bis 3 verwendet werden. Bei der Ausgestaltung in Fig. 4 sind mehr als zwei Dichtungselemente 11 in der Aufnahme des Aufnahmerahmens 6 angeordnet, wobei die Dichtungselemente 11 ein oder mehrere Durchgänge 12 für ein jeweiliges Kabel aufweisen, wobei Durchgänge mit größerem Durchmesser zum Beispiel für elektrische Versorgungsleitungen dienen, während Durchgänge mit kleinerem Durchmesser für Daten- oder Steuerleitungen nutzbar sind.

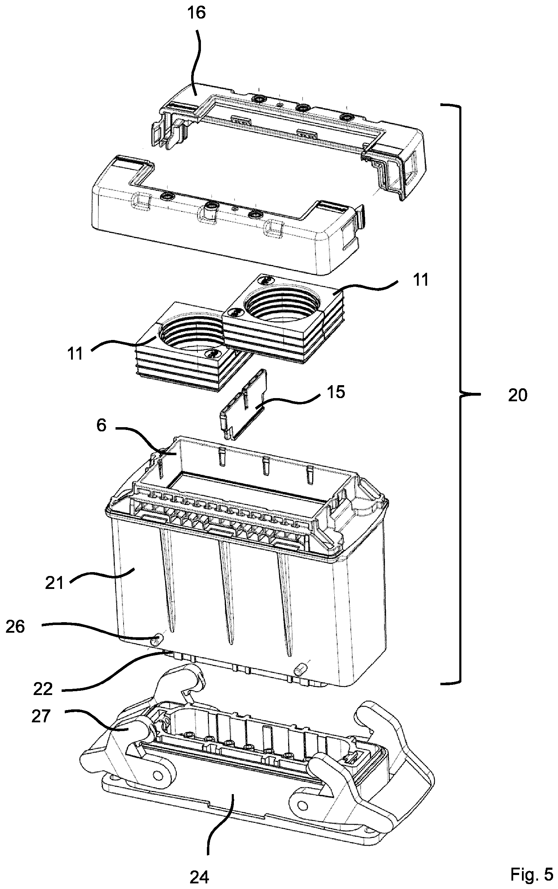

In den Fig. 5 bis 8 sind Ausführungsbeispiele gezeigt, die die Verwendung der unter Bezugnahme auf die Fig. 1 bis 4 erläuterten Kabelwanddurchführung im Zusammenhang mit einem Steckverbinder 20 zeigen. Für die gleichen Merkmale werden in den Fig. 5 bis 8 dieselben Bezugszeichen wie in den Fig. 1 bis 4 verwendet.

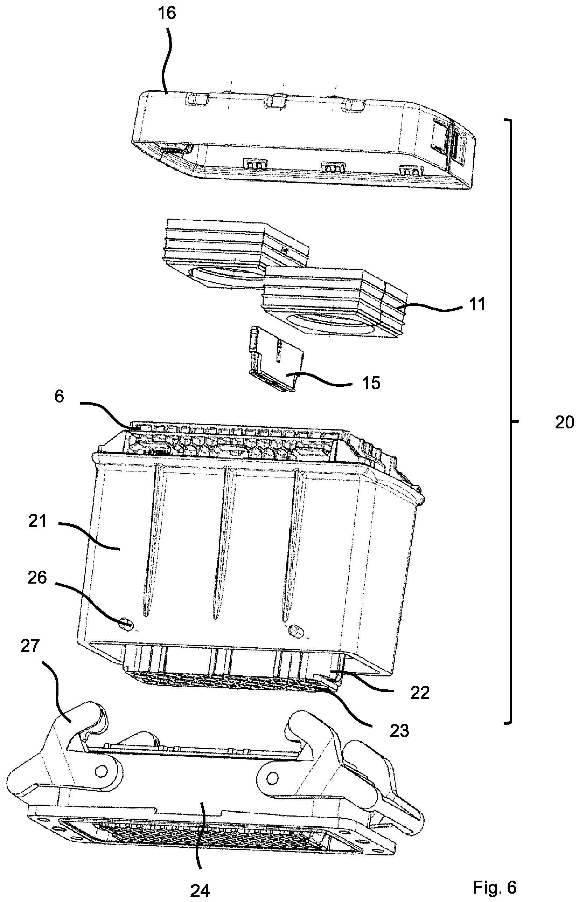

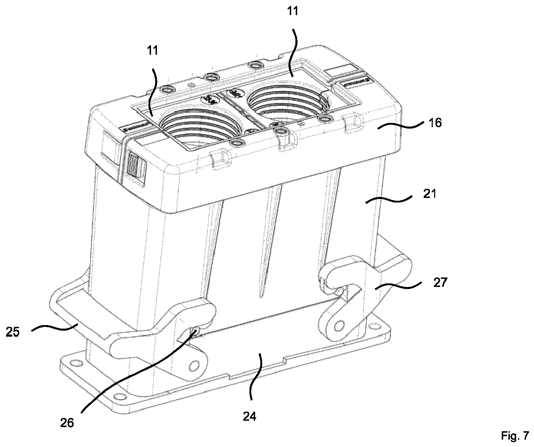

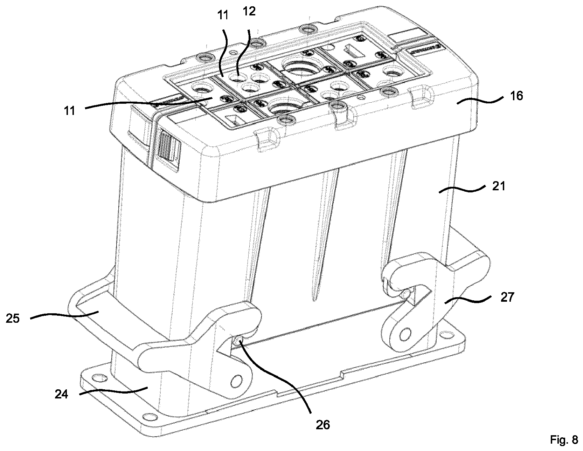

Das Gehäuse 1 aus den Fig. 1 bis 4 ist bei den Ausführungsbeispielen in den Fig. 5 bis 8 als ein Steckverbindergehäuse 21 ausgebildet, welches dazu dient, ein Steckverbinderbauteil 22 mit elektrischen Kontaktelementen 23 aufzunehmen, so dass das Steckverbindergehäuse 21 mit der Kabelwanddurchführung wahlweise mit einer zugeordneten Steckbuchse 24 lösbar zu verbinden ist, um für die mehreren Kabel oder Leitungen elektrische Verbindungen auszubilden. In den Fig. 5 und 6 ist die Kabelwanddurchführung vergleichbar den Fig. 1 und 2 im nicht montierten Zustand gezeigt. Die Fig. 7 und 8 zeigen dann Ausgestaltungen des Steckverbinders 20 (in Verbindung mit der zugeordneten Steckbuchse 24), wobei die Kabelwanddurchführung ausgebildet ist.

Um Steckverbindergehäuse 21 an der Steckbuchse 24 zu sichern, ist eine Sicherungseinrichtung 25 vorgesehen, die bei der dargestellten Ausführungsform Gehäusevorsprünge 26 an dem Steckverbindergehäuse 21 sowie zugeordnete Schwenkelemente 27 aufweist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung mit einer Kabelwanddurchführung für mehrere Kabel, aufweisend:
- ein Gehäuse (1; 21), bei dem Wandabschnitte (2) einen Gehäuseinnenraum (3) mehrseitig begrenzen; und
- eine Kabelwanddurchführung in einem Bereich einer Wandöffnung (5), die in einem der Wandabschnitte (4) zum Hindurchführen mehrerer Kabel gebildet ist, wobei die Kabelwanddurchführung Folgendes aufweist:
- einen Aufnahmerahmen (6), der die Wandöffnung (5) zumindest teilweise umgreifend an dem Wandabschnitt (4) einstückig angeformt ist und mit dem der Wandöffnung (5) gegenüberliegend eine Aufnahme gebildet ist;
- mindestens ein Dichtungselement (11), welches in der Aufnahme angeordnet ist und mit dem gedichtete Durchgänge (12) für die mehreren Kabel bereitgestellt sind, die jeweils eingerichtet sind, ein Kabel zum Durchführen durch die Wandöffnung (5) hindurch dichtend aufzunehmen; und
- ein dem Aufnahmerahmen (6) zugeordnetes Abdeckbauteil (16), mit welchem das mindestens eine Dichtungselement (11) in der Aufnahme sichernd montiert ist.

2. Anordnung nach Anspruch 1, **dadurch gekennzeichnet, dass** der Aufnahmerahmen (6) mit einer von der Außenseite des Wandabschnitts (4) vorstehenden Rahmenwand (7) gebildet ist, die an den Wandabschnitt (4) einstückig angeformt ist.

3. Anordnung nach Anspruch 2, **dadurch gekennzeichnet, dass** die Rahmenwand (7) mit Stützwandabschnitten (8) gebildet ist, die die Rahmenwand (7) in einer auf der Außenseite des Wandabschnitts (4) aufrechtstehenden Lage stützen.

4. Anordnung nach Anspruch 2 oder 3, **dadurch gekennzeichnet, dass** die Rahmenwand (7) wabenförmige Wandbereiche (10) aufweist.

5. Anordnung nach mindestens einem der vorangehenden Ansprüche, **dadurch gekennzeichnet, dass** der Aufnahmerahmen (6) die Wandöffnung (5) im Wesentlichen vollständig umgreift.

6. Anordnung nach mindestens einem der vorangehenden Ansprüche, **dadurch gekennzeichnet, dass** in der Aufnahme ein Rahmenbauteil (15) angeordnet ist, welches die Aufnahme in mehrere Teilaufnahmen unterteilt, die eingerichtet sind, jeweils ein Dichtungselement (11) aufzunehmen, mit dem zumindest ein gedichteter Durchgang für eines der mehreren Kabel bereitgestellt ist.

7. Anordnung nach mindestens einem der vorangehenden Ansprüche, **dadurch gekennzeichnet, dass** der Aufnahmerahmen (6) für ein Einführen des wenigstens einen Dichtungselements (11) in dem Aufnahmeraum (6) von außen auf einer von dem Gehäuse (1; 21) abgewandten Seite eingerichtet ist.

8. Anordnung nach mindestens einem der vorangehenden Ansprüche, **dadurch gekennzeichnet, dass** das Abdeckbauteil (16) werkzeuglos montiert ist.

9. Anordnung nach mindestens einem der vorangehenden Ansprüche, **dadurch gekennzeichnet, dass** das Abdeckbauteil (16) mit Hilfe einer Verbindungseinrichtung (17) montiert ist, die zumindest teilweise an dem Aufnahmerahmen (6) gebildet ist.

10. Anordnung nach mindestens einem der vorangehenden Ansprüche, **dadurch gekennzeichnet, dass** das Abdeckbauteil (16) in der montierten Stellung einen Gehäuseeckbereich umgreift, in welchem der Wandabschnitt (4) mit einem benachbarten Wandabschnitt des Gehäuses (1; 21) verbunden ist.

11. Anordnung nach mindestens einem der vorangehenden Ansprüche, **dadurch gekennzeichnet, dass** das Abdeckbauteil (16) mit Blick auf die Wandöffnung (5) randseitig mit dem mindestens einen Dichtungselement (11) überlappend angeordnet ist.

12. Anordnung nach mindestens einem der vorangehenden Ansprüche, **dadurch gekennzeichnet, dass** das Abdeckbauteil (16) mehrteilig mit mehreren Abdeckelementen (16, 16b) gebildet ist, derart, dass bei der Montage des Abdeckbauteils (16) eines der Abdeckelemente mit zumindest einem weiteren der Abdeckelemente mit Hilfe einander zugeordneter Verbindungselemente (18) verbunden wird.

13. Anordnung nach mindestens einem der vorangehenden Ansprüche, **dadurch gekennzeichnet, dass** Gehäuse ein Steckverbindergehäuse (21) ist, welches eingerichtet ist, im Gehäuseinnenraum ein Steckverbinderbauteil (22) mit elektrischen Kontaktelementen (23) aufzunehmen.

14. Steckverbinder (20), mit einer Anordnung nach mindestens einem der vorangehenden Ansprüche.
